# EUROPEAN PATENT SPECIFICATION

(11) **EP 1 764 954 B1**
(45) Date of publication and mention of the grant of the patent: **19.11.2008**
(21) Application number: 06120327.9
(22) Date of filing: 07.09.2006
(51) Int. Cl.: H04L 12/28, G06F 21/00

(54) **Information processing apparatus and control method for the information processing apparatus**
Informationsverarbeitungsvorrichtung und Steuerungsverfahren für die Informationsverarbeitungsvorrichtung
Appareil de traitement d'informations et procédé de contrôle d l'appareil de traitement d'informations

(30) Priority: 20.09.2005 JP 2005272560
(43) Date of publication of application: 21.03.2007
(73) Proprietor: KABUSHIKI KAISHA TOSHIBA, Tokyo 105-8001 (JP)
(72) Inventor: Tajima, Takeshi Toshiba Corporation, Tokyo 105-8001 (JP)
(74) Representative: Henkel, Feiler & Hänzel

(56) References cited:
- WO-A-03/034192
- US-A- 5 821 854
- US-A1- 2004 128 560

## Description

One embodiment of the invention relates to a security technique which is appropriate to apply, for instance, to a notebook-sized personal computer easy to carry.

In recent years, deskwork in an office has been performed by using a personal computer generally.

Recently, many offices have laid wireless LANs therein; connected personal computers to the wireless LANs without using any cable at their own conveniences and each staff of the office has become possible to simply take in necessary data from a shared file server, etc.

In the personal computers, there are a variety of types such as a desktop-type and a notebook-sized, so each notebook-sized personal computer has been extremely enhanced its performance. And, for instance, it is easy to house the notebook-sized personal computer in a drawer of a desk and a locker, so that the number of users adopting the notebook-sized personal as tools for the deskwork has increased.

Meanwhile, as for the notebook-sized personal computer, running a large risk of a theft such that it is carried away by an outsider is unavoidable.
Nowadays in which the capacity of storage as well as the performance of the notebook-size personal computer have been enhanced, storing a large volume of important data has lost much of its novelty now. Therefore, it is needed to take account of sufficient measures for the case that the notebook-sized personal computer has been carried away by the outsider.

US 2004/128560 discloses a control unit which transmits an ultrasonic signal having a distinctive characteristic within a controlled area. A protected unit stores two passwords in a non-volatile memory; a Power On Password (POP) and a Privileged Access Password (PAP). If the protected unit is removed from the controlled area, the PAP must be entered in order to re-boot the protected unit. In another embodiment, if the protected unit is removed from the controlled area, either the PAP must be entered in order to re-boot the protected unit, or the protected unit must be returned to the controlled area. Matching "token" generators may be used in both the control unit and the protected unit for added security, and the tokens may be encrypted for additional security.

The present invention is invented by given consideration to such situation, and its object is to provide an information processing apparatus and a control method for the information processing apparatus which realizes to restrict use at an outside of a predetermined area.

Accoring to the invention the above object is achieved by means of an information processing apparatus according to claim 1 and by a control method for an information processing apparatus according to claim 7. The dependent claims are directed to different advantageous aspects of the invention.

The invention can be more fully understood from the following detailed description when taken in conjunction with the accompanying drawings, in which:
FIG. 1 is an exemplary view showing an operation environment of an information processing apparatus regarding an embodiment of the present invention;
FIG. 2 is an exemplary perspective view showing an exterior appearance of the full face of the information processing apparatus of the embodiment;
FIG. 3 is an exemplary perspective view showing an exterior appearance in a state in which a display unit of the information processing apparatus of the embodiment is closed;
FIG. 4 is an exemplary block diagram showing a configuration of hardware of the information processing apparatus of the embodiment;
FIG. 5 is an exemplary block diagram showing a configuration of software of the information processing apparatus of the embodiment;
FIG. 6 is an exemplary view exemplifying an input screen for logging on displayed on the information processing apparatus of the embodiment; and
FIG. 7 is an exemplary flowchart showing an operation procedure for restricting use at the outside of a predetermined area by the embodiment.

Various embodiments according to the invention will be described hereinafter with reference to the accompanying drawings.

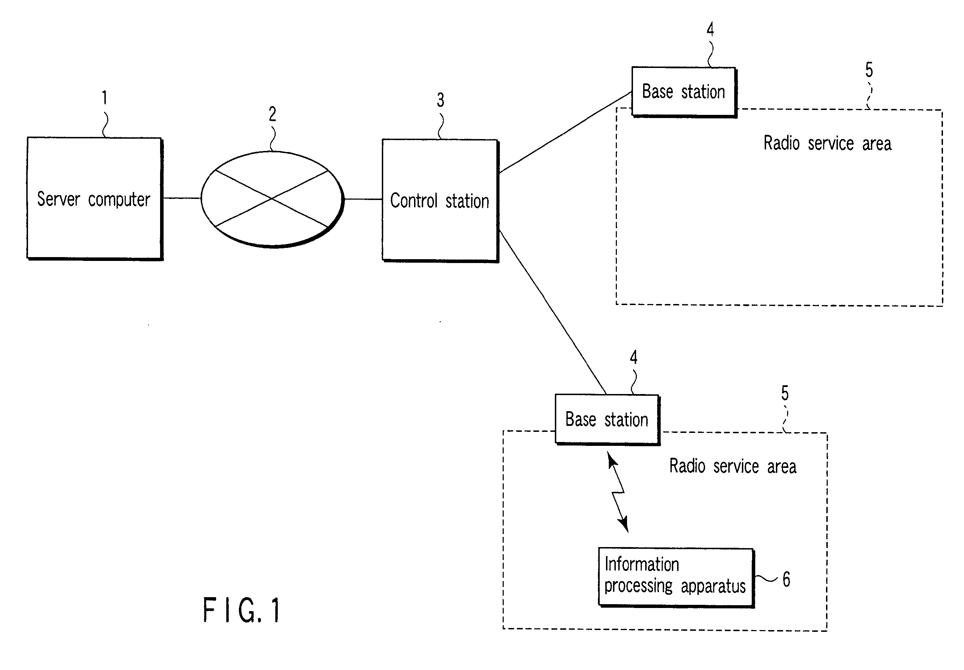

FIG. 1 shows the operation environment of the information processing apparatus regarding the one embodiment of the present invention. Here, it is presumed, for instance, that an information processing apparatus 6 is a notebook-sized personal computer which is provided for each staff of an enterprise. To provide the personal computer to each staff, it is defined that which base station 4 makes the personal computer be operable only under the control by the defined base station 4 and the information about the defined base station 4 is registered in a server computer 1 together with user identification information.

Each base station 4 forms radio service areas 5, respectively, to make radio communication with mobile stations. The processing apparatus 6 has a function to execute a radio communication with the base station 4, as a mobile station. A control station 3 houses each base station 4 to relay to a public line network 2. The server computer 1 is connected to the line network 2.

The information processing apparatus 6 can use dial-up access to the server computer 1 in logging on. The request for the dial-up access is transmitted to the server computer 1 via the base station 4. Upon receiving the request, the server computer 1 checks a user name and a password, and in addition to this, further checks whether or not the base station 4 which has relayed the transmission of the request coincides with a base station 4 defined to enable operating the processing apparatus 6. If all of the user names, passwords and base stations 4 are coincident with one another, the server computer 1 then replies an authentication establishment of the dial-up access.

The processing apparatus 6 which has received the reply of the authentication establishment carries on with monitoring whether or not the processing apparatus 6 itself is placed within the radio service area 5 to which it belongs after completing the dial-up access to the server computer 1 after logging on. The monitoring does not need to perform an actual data transmission/reception to/from the base station 4 forming the service area 5. And it may determine that the processing apparatus 6 departs from the service area 5 when an electric field intensity of a radio signal from the base station 4 reaches a level not more than a prescribed level, or that it departs form the service area 5 when handoff occurs. Upon detecting the departing from the service area 5, the processing apparatus 6 logs off voluntarily and forcibly.

That is, the processing apparatus 6 becomes possible to operate only under the predetermined base station 4, and in other words, the use at the outside of the service area 5 formed by the prescribed base station 4 is subjected to be restricted.

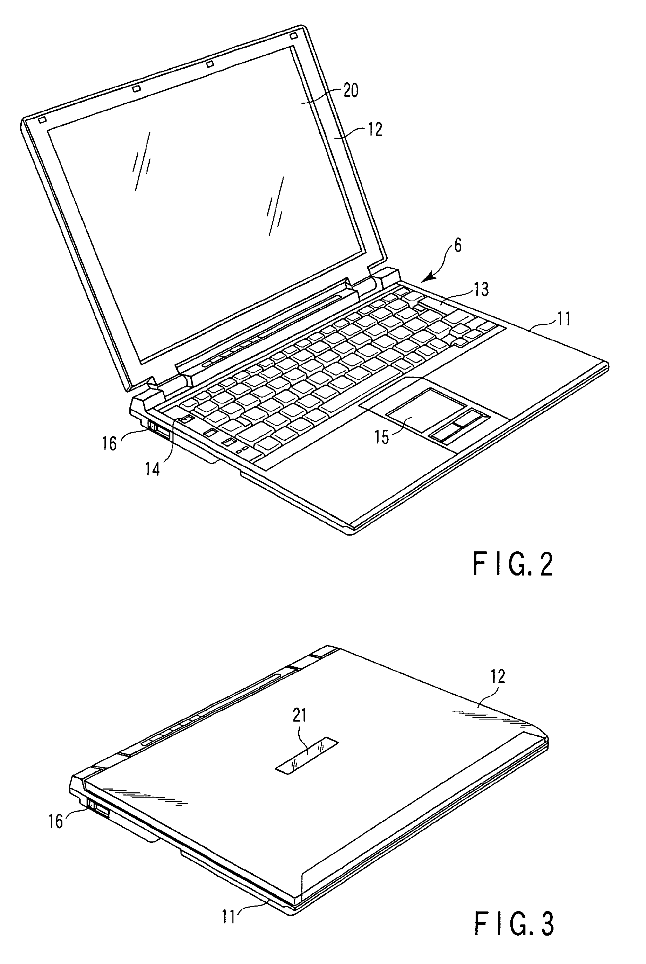

Next to this, referring to FIG. 2 and FIG. 3, the configuration of the information processing apparatus 6 will be set forth. As mentioned above, the processing apparatus (hereinafter referred to as a computer) 6 is composed as the notebook-sized personal computer. FIG. 2 is a perspective view when viewed from the front side of the computer 6 in a state where its display unit is opened.

The computer 6 consists of a computer main body 11 and a display unit 12. The display unit 12 has a built-in display device consisting of a liquid crystal display (LCD) 20, and the display screen of the LCD 20 is positioned at the almost the center of the display unit 12.

The display unit 12 is supported by the computer main body 11 and attached rotatably between an opening position at which the upper surface of the main body 11 is exposed and a closing position at which the upper surface thereof is covered. The main body 11 has a thin box-shaped housing, and a keyboard 13, a power button 14 to turn on/off the main body 6 and a touch pad 15 are disposed on the upper surface of the housing. The main body 11 has a communication device built-in.

A wireless communication switch 16 is disposed on the left side surface of the main body 11. The communication switch 16 is an operation switch to permit or inhibit an execution of a radio communication. The communication switch 16 is set to one state of a first state allowing executing the radio communication and a second state inhibiting executing the radio communication. With setting the communication switch 16 to the second state, it becomes possible to prevent the radio communication from being executed at a place, for instance, such as a hospital where the use of electric waves is restricted.

FIG. 3 is a perspective view showing the exterior appearance of the computer 6 in the state in which the display unit 12 is closed. A sub-display 21 is arranged on the rear surface of the display unit 12. The sub-display 21 displays information, etc. indicating, for example, the electric field intensity of the radio signal from a base station. Owing to the sub-display unit 21, a user can confirm whether or not the current position of the computer 6 is within the communication service area even in the state in which the display unit 12 is closed.

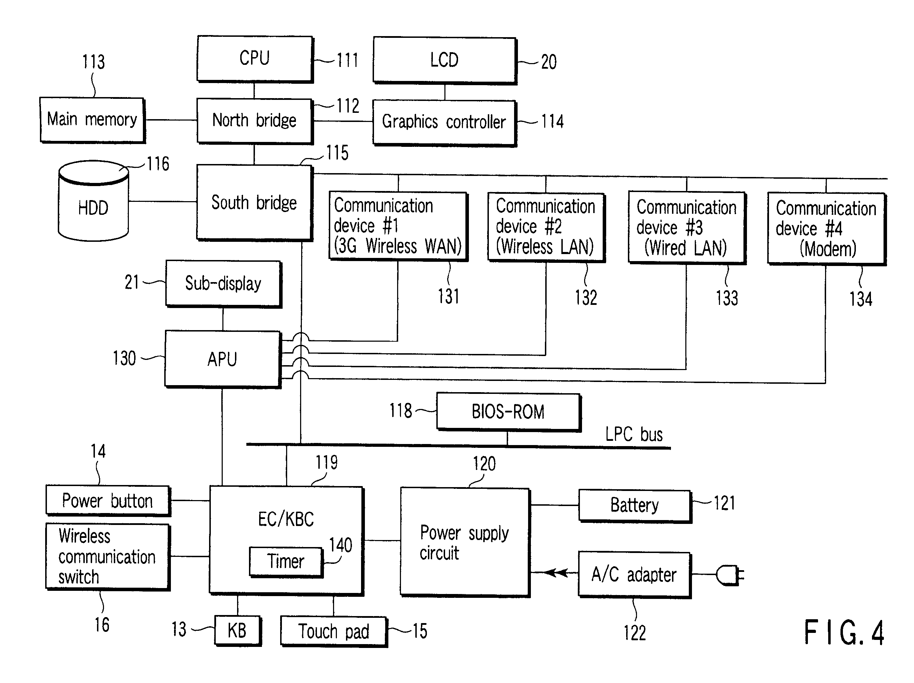

FIG. 4 shows an example of the hardware configuration of the computer 6.

The computer 6 includes a CPU 111, a north bridge 112, a main memory 113, a graphics controller 114, a south bridge 115, a hard disk drive (HDD) 116, a flash basic input output system (BIOS)-ROM 118, embedded controller/keyboard controller (EC/KBC) IC 119, a power supply circuit 120, an auxiliary processor unit (APU) 130, communication devices 131-134, etc.

The CPU 111 is a main processor to control operations of the computer 6. The CPU 111 executes an operating system (OS) and a variety of application programs/utility programs which are loaded into the main memory 113 from the HDD 116. The CPU 111 also executes a BIOS stored in the flash BIOS-ROM 118. The BIOS is a program to control hardware.

The north bridge 112 is a bridge device to connect between a local bus of the CPU 111 and the south bridge 115. The north bridge 112 also has a function of executing communication with the graphics controller 114 via an accelerated graphics port (AGP) bus, etc. The north bridge 112 further has a main controller to control the main memory 113 built-in.

The graphics controller 114 is a display controller to control the LCD 20 used as a display monitor of the computer 6. The south bridge 115 is connected to a peripheral component interconnect (PCI) bus and to a low pin count (LPC) bus independently. The south bridge 115 also incorporates an IDE controller to control the HDD 116.

The EC/KBC 119 is a one-chip microcomputer in which an embedded controller to manage a power source and a keyboard controller to control the keyboard (KB) 13 and the touch pad 15, etc. The EC/KBC 119 cooperates with the power supply circuit 120 to turn on/off the computer 6 depending on the operations of the power button switch 14 by the user. The power supply circuit 120 uses an external power source to be supplied through a battery 121 or an AC adopter 122 to generate operation power to be supplied to each component of the computer 6. Even in a state in which the computer 6 is turned off, the power supply circuit 120 supplies the operation power to the EC/KBC 119. The EC/KBC 119 also detects the on/off of the communication switch 16 to transfer the fact to the BIOS.

The APU 130 has a function to monitor each operation of the communication devices 131-134. That is, the APU 130 is electrically connected to each communication devices 131-134 through serial buses (for example, SMBUS, USB, etc.) in a point-to-point manner and capable of communicating with each communication device 131-134 directly. The APU 130 determines whether or not each of the communication devices 131-134 is available, namely, whether or not each of the communication devices 131-134 is in an executable state of a communication with an external device via a wired or radio network by making communications with each communication device 131-134. The APU 130 also has a function of controlling the sub-display 21.

The communication device 131 is a radio communication device and executes radio communication with base station 4 in accordance with a radio communication specification such as a 3G Wireless LAN. The 3G wireless LAN is a wide radio network of a mobile phone network, etc. The communication device 132 is also a radio communication device and performs radio communication with an access point (AP) in accordance with the radio communication specification such as the Wireless LAN.

The communication devices 133 and 134 are wired communication devices each. The communication device 133 performs communication with the external device via a Wired LAN. The communication device 134 is composed, for instance, of a modem to conduct communication with the external device via a telephone network.

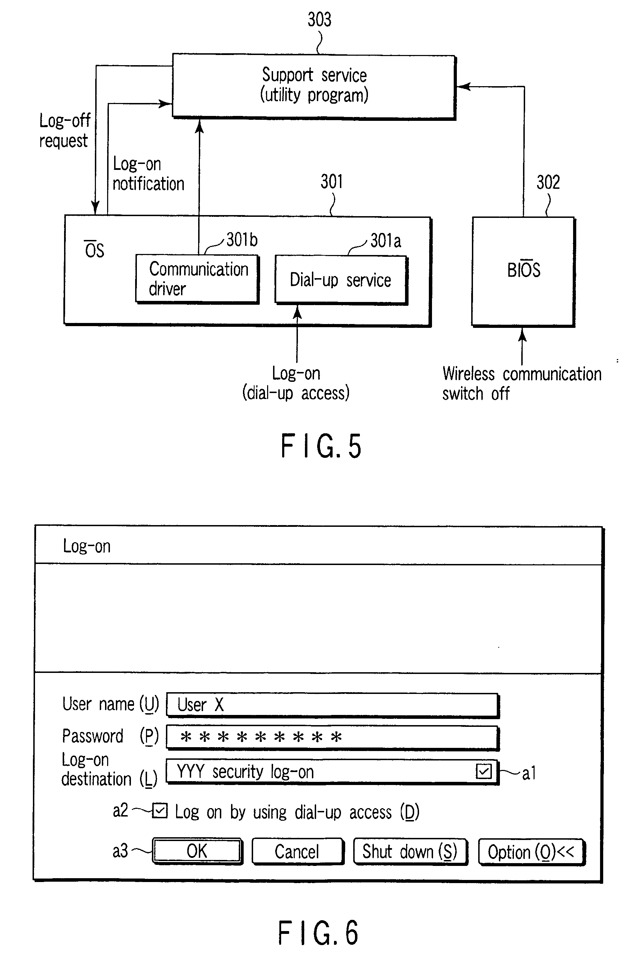

In succession, a software configuration to realize a restriction of the use at the outside of a specified area for the computer 6 having such a hardware configuration will be described with reference to FIG. 5.

An OS 301 is a basic program integrally control a resource management of the computer 6 and has a variety of modules including a dial-up service 301a to execute dial-up access to the server computer 1 and a communication driver 301b to drive and control each radio communication device.

When the computer 6 logs on, the OS 301 outputs an input screen for log-on shown in FIG. 6. The user inputs the user name and password in the input screen, and checks a check box (a2) of "log on by using a dial-up access" as well as specifies the server computer 1 for authentication in a field (a1) of "log-on destination".

In a state where the foregoing inputs have been performed, when an "OK" button is operated, the computer 6 tries to make dial-up access to the server computer 1 through the dial-up service 301a of the OS 301. Then, when the server computer 1 confirms the user name, password and relay base station 4 to reply the authentication establishment of the dial-up access, log-on is permitted and the permission is notified to a support service 303 that is a utility program.

The support service 303 is a resident-type program, and when the log-on is notified from the OS 301, it monitors whether or not the computer 6 has departed from the service area of the base station 4 to which the computer 6 has belonged at the time of the log-on as well as whether or not the handoff has occurred. The support service 303 monitors whether the communication switch 16 has not been switched to off through the BIOS 302 (which is stored in the flash BIOS-ROM 118).

If the support service 303 detects that the computer 6 has departed from the service area 5 of the base station 4 to which the computer 6 has belonged in a log-on time or that the communication switch 16 has switched to off, the support service 303 transmits a log-off request to the OS 301 as measurements to the case in which, for instance, the computer 6 has carried away by the outsider. Thereby, the limitation of the use at the outside of the predetermined area is achieved.

Even when an authorized user has erroneously carried away the computer 6 at the outside of the service area, the computer 6 is forcibly logged off. In this case, the user may return back to the predetermined area and log on again. In the case of having a suspend/resume function, the computer 6 becoming to be suspended in a log-on state, for such a situation, the computer 6 may log-off immediately in a suspension time and may log-off at timing when it is detected that the computer 6 has moved to the outside of the service area or it has switched off after a resume.

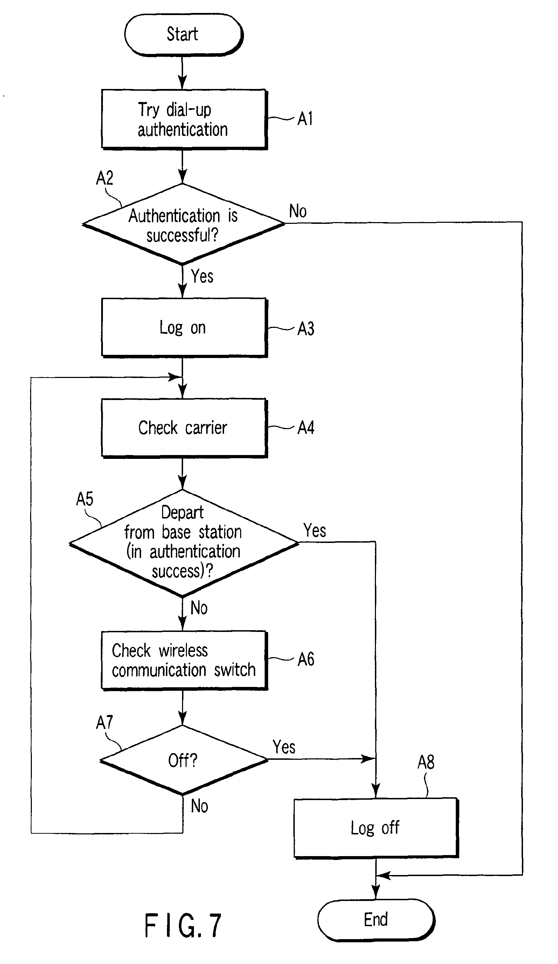

FIG. 7 is a flowchart showing an operation procedure to restrict the use of the computer 6 at the outside of the prescribed area.

The computer 6 firstly tries the dial-up access to the server computer for authentication 1 (block A1). If the authorized user (who can input a correct user name and password) is present in the predetermined area, the authentication is completed successfully (yes in block A2), so that the computer 6 is permitted to log on (block A3).

When logged on, the computer 6 checks by itself whether the self has departed from the service area of the base station 4 in logging on (block A4,A5) and also checks whether or not the wireless communication switch 16 has switched off (block A6,A7).

The result of this checking having checked the fact that the computer 6 is at the outside of the service area of the base station in logging on (Yes in block A5) or that the communication switch 16 is switched off (Yes in block A7), the computer 6 is forcibly logged off at that moment (block A8).

As mentioned above, the computer 6 in the embodiment is controlled so as to become operable only within the predetermined area of the base station 4. That is to say, it is achieved that the computer 6 is restricted to be used at the outside of the predetermined area.

## Claims

1. An information processing apparatus (6) including a function (301a) of performing dial-up access to a server computer (1) through a radio base station (4) forming a radio service area (5) in a predetermined geographic area, comprising:
monitoring means (303) for monitoring whether or not the processing apparatus (6) is placed in a radio service area to which the processing apparatus (6) belongs when dial-up access is performed successfully; and
automatic log-off means (303) for forcibly terminating use of the processing apparatus (6) when the monitoring means detects that the processing apparatus (6) departs from the service area to which the processing apparatus belongs when dial-up access is performed successfully.

2. The information processing apparatus (6) according to claim 1, wherein the monitoring means is configured to monitor an electric field intensity of a radio signal from the radio base station forming the service area.

3. The information processing apparatus (6) according to claim 1, wherein the monitoring means is configured to determine that the processing apparatus (6) departs from the service area when handoff occurs.

4. The information processing apparatus (6) according to claim 1, further comprising a switch (16) to set to one of a first state allowing execution of the radio communication and a second state inhibiting execution of the radio communication,
wherein the automatic log-off means is configured to forcibly terminate the use of the processing apparatus (6) when the second state is set.

5. The information processing apparatus (6) according to claim 1, further comprising a suspend/resume function,
wherein the automatic log-off means is configured to forcibly terminate the use of the processing apparatus (6) in a suspension time.

6. The information processing apparatus (6) according to claim 1, further comprising a suspend/resume function,
wherein the automatic log-off means is configured to forcibly terminate the use of the processing apparatus (6) when the monitoring detects that the processing apparatus (6) departs from the service area after resume.

7. A control method for an information processing apparatus (6) including a function (301a) of performing dial-up access to a server computer (1) through a radio base station (4) forming a radio service area (5) in a predetermined geographic area, comprising:
monitoring (A4) whether or not the processing apparatus (6) is placed in a radio service area to which the processing apparatus (6) belongs when dial-up access to a predetermined server computer is performed successfully; and
forcibly terminating (A8) use of the processing apparatus (6) when the monitoring detects that the processing apparatus (6) departs from the service area to which the processing apparatus belongs when dial-up access is performed successfully.

8. The control method according to claim 7, wherein the information processing apparatus (6) includes a switch to set to one of a first state allowing execution of the radio communication and a second state inhibiting execution of the radio communication, and
the terminating forcibly terminates the use of the processing apparatus (6) when the second state is set.

9. The control method according to claim 7, wherein the information processing apparatus (6) includes a suspend/resume function, and
the terminating forcibly terminates the use of the processing apparatus (6) in a suspension time.

10. The control method according to claim 7, wherein the information processing apparatus (6) includes a suspend/resume function, and
the terminating forcibly terminates the use of the processing apparatus (6) when the monitoring means detects that the processing apparatus (6) departs from the service area after resume.

11. A computer program, comprising computer program code means adapted to perform all steps of the method according to claim 7, when said program is loaded into an internal memory of an information processing apparatus.

## Patentansprüche

1. Informationsverarbeitungsvorrichtung (6) mit einer Funktion (301a) zum Durchführen eines Anwahlzugriffs auf einen Servercomputer (1) über eine Funkbasisstation (4), die ein Funkservicegebiet (5) in einem vorgegebenen geographischen Gebiet bildet, mit
einem Überwachungsmittel (303) zum Überwachen, ob die Verarbeitungsvorrichtung (6) in einem Funkservicegebiet angeordert ist, zu dem die Verarbeitungsvorrichtung (6) gehört, wenn der Anwahlzugriff erfolgreich ausgeführt wird;
einem automatisches Lock-Off-Mittel (303) zum zwangsweißen Beenden der Benutzung der Verarbeitungsvorrichtung (6), wenn das Überwachungsmittel erkennt, dass die Verarbeitungsvorrichtung (6) aus dem Servicegebiet abweicht, zu dem die Verarbeitungsvorrichtung gehört, wenn der Anwahlzugriff erfolgreich durchgeführt wird.

2. Informationsverarbeitungsvorrichtung (6) nach Anspruch 1, bei dem das Überwachungsmittel ausgestaltet ist, um eine elektrische Feldstärke eines Funksignals von der Funkbasisstation, die das Servicegebiet bildet, zu überwachen.

3. Informationsverarbeitungsvorrichtung (6) nach Anspruch 1, bei dem das Überwachungsmittel ausgestaltet ist, um zu Bestimmen, dass die Verarbeitungsvorrichtung (6) von dem Servicegebiet abweicht, wenn "Handoff" auftritt.

4. Informationsverarbeitungsvorrichtung (6) nach Anspruch 1, die des Weiteren einen Schalter (16) umfasst, um in einen ersten Zustand eingestellt zu werden, der die Ausführung der Funkverbindung ermöglicht, und einen zweiten Zustand, der die Ausführung der Funkverbindung verhindert, wobei das automatische Lock-Off-Mittel ausgestaltet ist, um zwangsweise die Benutzung der Verarbeitungsvorrichtung (6) zu beenden, wenn der zweite Zustand eingestellt ist.

5. Informationsverarbeitvorrichtung (6) nach Anspruch 1, die des Weiteren eine Suspend/Resume-Funktion aufweist, wobei das automatische Lock-Off-Mittel ausgestaltet ist, um zwangsweise die Benutzung der Verarbeitungsvorrichtung (6) in einer Suspension-Zeit zu beenden.

6. Informationsverarbeitungsvorrichtung (6) nach Anspruch 1, die des Weiteren eine Suspend/Resume-Funktion aufweist, wobei das automatische Lock-Off-Mittel ausgestaltet ist, um zwangsweise die Benutzung der Verarbeitungsvorrichtung (6) zu beenden, wenn das Überwachungsmittel erkennt, dass die Verarbeitungsvorrichtung (6) nach einem Resume von dem Servicegebiet abweicht.

7. Steuerverfahren für eine Informationsverarbeitungsvorrichtung (6) mit einer Funktion (301) zum Durchführen eines Anwahlzugriffes auf einen Servercomputer (11) über eine Funkbasisstation (4), die ein Funkservicegebiet (5) in einem vorgegebenen geographischen Gebiet bildet, mit:
Überwachen (A4), ob die Verarbeitungsvorrichtung (6) in einem Funkservicegebiet angeordnet ist, zu dem die Verarbeitungsvorrichtung (6) gehört, wenn der Anwahlzugriff auf einen bestimmten Servercomputer erfolgreich durchgeführt wird;
zwangsweißes Beenden (A8) der Benutzung der Verarbeitungsvorrichtung (6), wenn die Überwachung erkennt, dass die Verarbeitungsvorrichtung (6) von dem Servicegebiet abweicht, zu dem die Verarbeitungsvorrichtung gehört, wenn der Anwahlzugriff erfolgreich ausgeführt ist.

8. Steuerverfahren nach Anspruch 7, bei dem die Informationsverarbeitungsvorrichtung (6) einen Schalter umfasst, um einen ersten Zustand, der die Ausführung einer Funkverbindung ermöglicht, oder einen zweiten Zustand, der die Ausführung einer Funkverbindung verhindert, einzustellen, und wobei die Benutzung der Verarbeitungsvorrichtung (6) zwangsweise beendet wird, wenn der zweite Zustand eingestellt ist.

9. Steuerverfahren nach Anspruch 7, bei dem die Informationsverarbeitungsvorrichtung 6 eine Suspend/Resume-Funktion aufweist, und
die Benutzung der Verarbeitungsvorrichtung 6 in einer Suspension-Zeit zwangsweise beendet wird.

10. Steuerverfahren nach Anspruch 7, bei dem die Informationsverarbeitungsvorrichtung (6) eine Suspend/Resume-Funktion aufweist, und
wobei die Benutzung der Verarbeitungsvorrichtung (6) zwangsweise beendet wird, wenn das Überwachungsmittel erkennt, dass die Verarbeitungsvorrichtung (6) nach einem Resume dem Servicegebiet abweicht.

11. Computerprogramm mit Computerprogrammcodemitteln, die ausgestaltet sind, um alle Schritte des Anspruchs 7 durchzuführen, wenn das Programm in einem internen Speicher einer Informationsverarbeitungsvorrichtung geladen ist.

## Revendications

1. Appareil de traitement d'information (6) incluant une fonction (301 a) de réalisation d'un accès par composition de numéro sur un ordinateur serveur (1) par l'intermédiaire d'une station de base radio (4) formant une zone de desserte radio (5) dans une zone géographique prédéterminée, comprenant :
un moyen de surveillance (303) pour surveiller si oui ou non l'appareil de traitement (6) est placé dans une zone de desserte radio à laquelle l'appareil de traitement (6) appartient lorsqu'un accès par composition de numéro est réalisé avec succès ; et
un moyen de déconnexion automatique (303) pour terminer de manière forcée l'utilisation de l'appareil de traitement (6) lorsque le moyen de surveillance détecte que l'appareil de traitement (6) s'écarte de la zone de desserte à laquelle l'appareil de traitement appartient lorsqu'un accès par composition de numéro est réalisé avec succès.

2. Appareil de traitement d'information (6) selon la revendication 1, dans lequel le moyen de surveillance est configuré pour surveiller une intensité de champ électrique d'un signa radio en provenance de la station de base radio formant la zone de desserte.

3. Appareil de traitement d'information (6) selon la revendication 1, dans lequel le moyen de surveillance est configuré pour déterminer que l'appareil de traitement (6) s'écarte de la zone de desserte lorsqu'un transfert survient.

4. Appareil de traitement d'information (6) selon la revendication 1, comprenant en outre un commutateur (16) pour établir un état pris parmi un premier état permettant l'exécution de la communication radio et un second état inhibant l'exécution de la communication radio,
dans lequel le moyen de déconnexion automatique est configuré pour terminer de manière forcée l'utilisation de l'appareil de traitement (6) lorsque le second état est établi.

5. Appareil de traitement d'information (6) selon la revendication 1, comprenant en outre une fonction de suspension/reprise,
dans lequel le moyen de déconnexion automatique est configuré pour terminer de manière forcée l'utilisation de l'appareil de traitement (6) dans un temps de suspension.

6. Appareil de traitement d'information (6) selon la revendication 1 , comprenant en outre une fonction de suspension/reprise,
dans lequel le moyen de déconnexion automatique est configuré pour terminer de manière forcée l'utilisation de l'appareil de traitement (6) lorsque la surveillance détecte que l'appareil de traitement (6) s'écarte de la zone de desserte après reprise.

7. Procédé de commande pour un appareil de traitement d'information (6) incluant une fonction (301 a) consistant à réaliser un accès par composition de numéro sur un ordinateur serveur (1) par l'intermédiaire d'une station de base radio (4) formant une zone de desserte radio (5) dans une zone géographique prédéterminée, comprenant :
la surveillance (A4) de si oui ou non l'appareil de traitement (6) est placé dans une zone de desserte radio à laquelle l'appareil de traitement (6) appartient lorsqu'un accès par composition de numéro sur un ordinateur serveur prédéterminé est réalisé avec succès ; et
la terminaison de manière forcée (A8) de l'utilisation de l'appareil de traitement (6) lorsque la surveillance détecte que l'appareil de traitement (6) s'écarte de la zone de desserte à laquelle l'appareil de traitement appartient lorsqu'un accès par composition de numéro est réalisé avec succès.

8. Procédé de commande selon la revendication 7, dans lequel l'appareil de traitement d'information (6) inclut un commutateur pour un établissement dans un état pris parmi un premier état permettant l'exécution de la communication radio et un second état inhibant l'exécution de la communication radio ; et
la terminaison de manière forcée termine l'utilisation de l'appareil de traitement (6) lorsque le second état est établi.

9. Procédé de commande selon la revendication 7, dans lequel l'appareil de traitement d'information (6) inclut une fonction de suspension/reprise ; et
la terminaison termine de manière forcée l'utilisation de l'appareil de traitement (6) dans un temps de suspension.

10. Procédé de commande selon la revendication 7, dans lequel l'appareil de traitement d'information (6) inclut une fonction de suspension/reprise ; et
la terminaison termine de manière forcée l'utilisation de l'appareil de traitement (6) lorsque le moyen de surveillance détecte que l'appareil de traitement (6) s'écarte de la zone de desserte après reprise.

11. Programme d'ordinateur comprenant un moyen de code de moyen de programme d'ordinateur adapté pour réaliser toutes les étapes du procédé selon la revendication 7, lorsque ledit programme est chargé dans une mémoire interne d'un appareil de traitement d'information.
